# EUROPÄISCHE PATENTSCHRIFT

(11) **EP 2 543 490 B1**
(45) Veröffentlichungstag und Bekanntmachung des Hinweises auf die Patenterteilung: **29.08.2018**
(21) Anmeldenummer: 12185868.2
(22) Anmeldetag: 04.06.2007
(51) Int. Cl.: B29C 45/12, B29C 45/67, B29C 45/04

(54) **Schliesseinheit für eine Spritzgiessmaschine**
Locking unit for an injection moulding machine
Unité de fermeture pour une machine de moulage par injection

(30) Priorität: 09.06.2006 DE 102006026846
(43) Veröffentlichungstag der Anmeldung: 09.01.2013
(62) Teilanmeldung aus: 07729826.3
(73) Patentinhaber: KraussMaffei Technologies GmbH, 80997 München (DE)
(72) Erfinder: Reinhardt, Thomas, 85653 Aying/Großhelfendorf (DE)
(74) Vertreter: Wilhelm, Ludwig

(56) Entgegenhaltungen:
- JP-A- H07 195 414
- US-A- 5 928 684

## Beschreibung

Die Erfindung betrifft eine Schließeinheit einer Spritzgießmaschine mit zwei äußeren Formaufspannplatten, mit einer zwischen den äußeren Formaufspannplatten angeordneten Mittelplatte, sowie mit Säulen zur Aufnahme einer Schließkraft.

Aus dem Stand der Technik sind Schließeinheiten mit zwei äußeren Formaufspannplatten und einer dazwischen angeordneten Mittelplatte bekannt, bei denen die Mittelplatte drehbar ausgeführt ist oder aber auch nicht drehbar im Sinne einer klassischen Etagen- oder Tandem-Anordnung. (Johannaber "Kunststoff-Maschinenführer", 4.Ausgabe, Kapitel 5.7.3; DE 10217584 A1; WO 2005/035218 A1; EP0794045 A1 und EP 1 512 512 A2).

Bei der Schließeinheit gemäß der DE 10217584 A1 ist auf einem Maschinenbett eine feststehende Formaufspannplatte befestigt und dieser gegenüber kann eine bewegliche Formaufspannplatte sowie eine um eine vertikale Achse drehbare Mittelplatte verfahren werden. Zum Verfahren der Mittelplatte ist zwischen dieser und der feststehenden Formaufspannplatte ein Hydraulikzylinder vorgesehen und das Verfahren der beweglichen Formaufspannplatte erfolgt durch Eilhubzylinder zwischen den beiden Formaufspannplatten. Die beiden Formaufspannplatten sind durch vier Säulen miteinander verbunden, die die Formaufspannplatten durchsetzen. An der beweglichen Formaufspannplatte sind Klemmvorrichtungen zum Verriegeln der beweglichen Formaufspannplatte mit den Säulen vorgesehen. Zur Erzeugung des Schließdrucks sind an der feststehenden Formaufspannplatte Druckkissen vorgesehen, mittels der die Säulen zusammen mit der beweglichen Formaufspannplatte an die feststehende Formaufspannplatte herangezogen werden können.

Im Unterschied dazu ist bei der Schließeinheit gemäß der WO 2005/035218 A1 die Mittelplatte axial unverschieblich auf dem Maschinenbett montiert und die beiden äußeren Formaufspannplatten werden auf diese zu und von dieser wegbewegt. Die Verriegelung und der Schließkraftaufbau erfolgen in gleicher Weise wie bei der DE 10217584 A1, d.h. an einer der beiden äußeren Formaufspannplatten sind Verriegelungssysteme vorgesehen, um die Säulen mit dieser Formaufspannplatte verriegeln zu können und an der anderen äußeren Formaufspannplatte sind Druckkissen zur Erzeugung der Schließkraft vorgesehen.

Bei beiden zuvor genannten Schließeinheiten werden die Formwerkzeuge zu beiden Seiten der Mittelplatte, also in beiden Etagen, stets gleichzeitig geschlossen und geöffnet. Im geöffneten Zustand liegt sozusagen der doppelte Formöffnungsweg der Schließeinheit vor, da beide Etagen gleichzeitig offen sind. Dies erfordert eine vergleichsweise große Aufstellfläche der Spritzgießmaschine, was aber bei drehenden Mittelplatten insofern in Kauf genommen werden muss, als die Drehung der Mittelplatte die Öffnung beider Etagen voraussetzt.

Aus der EP 0794045 A1, Figuren 20 und 21, ist eine weitere Schließeinheit mit einer feststehenden und einer beweglichen Formaufspannplatte bekannt, zwischen denen ein mittlerer Formwerkzeugträger in Maschinenlängsrichtung verfahrbar und um eine horizontale oder eine vertikale Achse drehbar ist. Auf beiden Seiten des mittleren Formwerkzeugträgers sind Säulen befestigt, die sich zu den beiden äußeren Formaufspannplatten erstrecken. Diejenigen Säulen, die sich zu der feststehenden Formaufspannplatte erstrecken, können in dort angeordneten Klemmeinrichtungen eingefahren und verklemmt werden. Diejenigen Säulen, die sich zu der beweglichen Formaufspannplatte erstrecken, durchsetzen diese und bilden die Kolbenstangen in Kolben-Zylinder-Einheiten, mit denen die bewegliche Formaufspannplatte auf das mittlere Formträgerlement zu und von diesem weg verfahren sowie mit diesem verklemmt werden kann. Die Verfahrzylinder an dem mittleren Formwerkzeugträger und die Kolben-Zylinder-Einheiten an der beweglichen Formaufspannplatte können simultan betätigt werden, um beide Etagen gleichzeitig zu schließen und gleichzeitig einen Einspritzvorgang in beiden Etagen auszuführen. Sie können aber auch mit einer geringen Phasenverschiebung betätigt werden.

Aus der nächstkommenden EP 1 512 512 A2 ist eine weitere Schließeinheit bekannt, bei der die Mittelplatte axial unverschieblich auf dem Maschinenbett montiert ist und die beiden äußeren Formaufspannplatten auf diese zu und von dieser weg verfahren werden können. In jeder der beiden äußeren Formaufspannplatten sind jeweils vier Säulen befestigt, die in die Mittelplatte eingefahren und dort verriegelt werden können.

Die Mittelplatte ist auf einem fest mit dem Maschinenbett verbundenen Teil um eine vertikale Achse drehbar. In einer Ausgestaltung (siehe Abschnitt [0007] in EP 1 512 512 A2) kann das Mittelteil fest mit dem Maschinenbett verschraubt werden, d.h. die Mittelplatte ist nicht drehend ausgeführt, was dann einer sogenannten Tandem-Spritzgießmaschine entspricht. An jeder der beiden äußeren Formaufspannplatten können kurzhubige Hydraulikzylinder bzw. Druckkissen zur Erzeugung einer Schließkraft vorgesehen werden, insgesamt also acht kurzhubige Hydraulikzylinder bzw. Druckkissen. Auf diese Weise können in beiden Etagen unterschiedliche Zykluszeiten realisiert werden. US5928684 A offenbart eine Schließeinheit einer Spritzgießmaschine gemäß dem Oberbegriff des Anspruchs 1. Ausgehend hiervon liegt der Erfindung die Aufgabe zugrunde, eine Schließeinheit für eine Spritzgießmaschine der eingangs genannten Art anzugeben, bei der die beiden Etagen bzw. die beiden Arbeitsebenen auf einfache Art und Weise unabhängig voneinander betrieben werden können.

Die Lösung dieser Aufgabe erfolgt durch eine Schließeinheiten mit den Merkmalen von Anspruch 1. Vorteilhafte Weiterentwicklungen und Ausgestaltungen sind in den Unteransprüchen angegeben.

Dadurch, dass die Säulen an der Mittelplatte befestigt sind, dass an jeder der beiden äußeren Formaufspannplatten Verriegelungssysteme und Druckkissen vorgesehen sind, die unabhängig voneinander betrieben werden können, und dass ein erster Linearantrieb zwischen den beiden äußeren Formaufspannplatten vorgesehen ist, können die Etagen bzw. die Arbeitsebenen auf einfache Art und Weise unabhängig voneinander auf- und zugefahren sowie unabhängig voneinander verriegelt und Schließkraft aufgebaut werden (Tandem-Betrieb) Beim Tandem-Betrieb wird ein Linearantrieb an der Mittelplatte nur zum Werkzeugeinbau benötigt.

Die Mittelplatte kann fest mit dem Maschinenbett der Spritzgießmaschine verbunden und die beiden äußeren Formaufspannplatten verschieblich auf dem Maschinenbett abgestützt sein. Wenn die eine der äußeren Formaufspannplatten mit der Mittelplatte verriegelt ist und gegebenenfalls Schließdruck aufgebaut ist, kann durch Betätigen des Linearantriebs zwischen den beiden Formaufspannplatten die andere - nicht verriegelte - Formaufspannplatte gegenüber der ortsfesten Mittelplatte und gegenüber der mit dieser verriegelten Formaufspannplatte verfahren werden und umgekehrt. Aufgrund der an der ortsfesten Mittelplatte befestigten Säulen ist es möglich, dass abwechselnd stets eine Formaufspannplatte mit der Mittelplatte verriegelt ist, und gegebenenfalls Schließddruck aufgebaut ist, während die andere Formaufspannplatte mittels des Linearantriebs verfahren werden kann. Auf diese Weise können in der einen Etage die Funktionen "Einspritzen", "Nachdruck", "Kühlen" und "Plastifizieren" erfolgen, während in der anderen Etage die Funktionen "Öffnen", "Kernzug" (optional), "Auswerfen" und "Schließen" erfolgen. Der Produktionsablauf beruht in diesem Fall also darauf, dass der Formteilherstellungsprozeß in beiden Etagen versetzt zueinander durchgeführt wird.

In einer alternativen Ausführungsform kann eine der äußeren Formaufspannplatte fest mit dem Maschinenbett verbunden sein und die feststehende Formaufspannplatte bilden. Die andere äußere Formaufspannplatte bildet die bewegliche Formaufspannplatte und ist ebenso wie die Mittelplatte verschieblich auf dem Maschinenbett abgestützt. Wenn die bewegliche Formaufspannplatte mit der Mittelplatte verriegelt ist und gegebenenfalls Schließdruck aufgebaut ist, kann durch Betätigen des Linearantriebs zwischen den beiden Formaufspannplatten die bewegliche Formaufspannplatte zusammen mit der Mittelplatte gegenüber der feststehenden Formaufspannplatte verfahren werden, um die Etage zwischen der Mittelplatte und der feststehenden Formaufspannplatte zu öffnen. Hierbei werden die Säulen aufgrund ihrer Befestigung an der Mittelplatte mitbewegt. Wenn die Mittelplatte mit der feststehenden Formaufspannplatte verriegelt ist und gegebenenfalls Schließdruck aufgebaut ist, kann durch Betätigen des Linearantriebs zwischen den beiden Formaufspannplatte die bewegliche Formaufspannplatte von der Mittelplatte weg verfahren werden, um die Etage zwischen der Mittelplatte und der beweglichen Formaufspannplatte zu öffnen. Hierbei werden die Säulen nicht mitbewegt.

Desweiteren können ein oder mehrere Hydraulikzylinder als weitere Linearantriebe zwischen einer der Formaufspannplatten und der Mittelplatte vorgesehen werden, um die Mittelplatte auf einfache Art und Weise in eine Werkzeugeinbauposition verfahren zu können. Diese Linearantriebe sind vorzugsweise diagonal versetzt zueinander und zu den Linearantrieben für das Verfahren der äußeren Formaufspannplatten angeordnet. Während des Produktionsbetriebs im Tandem-Betrieb werden diese weiteren Linearantriebe jedoch nicht benötigt; im Falle von Hydraulikzylindern werden diese auf drucklosen Umlauf gestellt, so dass sie die Verfahrbewegungen einfach "mitmachen". Nachfolgend sollen diese weiteren an der Mittelplatte befestigten Linearantriebe teilweise auch als Hilfsantriebe bezeichnet werden, insbesondere im Zusammenhang mit der Beschreibung der Schließeinheit im Tandem-Betrieb.

Für einen Mehrkomponenten-Betrieb kann die Mittelplatte einen drehbaren Formwerkzeugträger aufweisen. Beispielsweise kann die Mittelplatte als Tragrahmen ausgebildet sein und einen platten- oder würfelförmigen Formwerkzeugträger aufweisen, der mittels eines geeigneten Drehantriebs gedreht werden kann, um die in einer Etage bzw. Arbeitsebene hergestellten Vorspritzlinge in die andere Etage bzw. Arbeitsebene zu transferieren. Eine Mittelplatte in dieser Ausgestaltung ist für sich genommen bekannt, beispielsweise aus der WO 03/013824 A1, so dass nähere Angaben zu einer solchen Mittelplatte vorliegend entbehrlich sind.

Um ein möglichst gleichmäßiges Verfahren der Formaufspannplatten relativ zueinander zu gewährleisten, können zwei diagonal zueinander angeordnete Linearantriebe zwischen den beiden äußeren Formaufspannplatten vorgesehen werden, beispielsweise zwei diagonal zueinander angeordnete Hydraulikzylinder.

Die Säulen können als einzelne Säulenstücke ausgebildet sein, die zu beiden Seiten der Mittelplatte befestigt sind. Es können aber auch Säulen vorgesehen werden, die durch die Mittelplatte hindurch verlaufen und mit ihr verbunden sind.

Bei einer Spritzgießmaschine mit der offenbarten Schließeinheit sind die Spritzaggregate an den beiden äußeren Formaufspannplatten angelenkt und werden bei deren Verfahrbewegungen mitgenommen. Bei der Variante mit einer ortsfesten äußeren Formaufspannplatte und einer beweglichen Mittel- sowie einer beweglichen äußeren Formaufspannplatte wird nur ein bewegliches Spritzaggregat benötigt, das den gesamten Schließhub aufnehmen muss.

Für einen zeitlich versetzten Produktionsablauf als Tandem-Spritzgießmaschine kann die Schließeinheit und mit ihr die gesamte Spritzgießmaschine kürzer konstruiert werden. Ferner ergibt sich aufgrund der kürzeren Formöffnungswege eine Reduzierung der Zykluszeit beim Tandem-Betrieb und damit ein Produktionsgewinn an Formteilen. Aufgrund der an beiden äußeren Formaufspannplatten vorgesehenen Druckkissen mit Verriegelungssystemen kann die Spritzgießmaschine unabhängig von der jeweilig gegenüberliegenen Formwerkzeugsseite in jeder Etage die maximale Schließkraft erzeugen. Es können aber auch unterschiedliche Schließkräfte in den beiden Etagen erzeugt werden.

Bei einer Produktion im klassischen Etagen-Betrieb ist der Ablauf in der Regel zeitlich nicht versetzt, d.h. die beiden Etagen werden gleichzeitig auf und zugefahren. Während bei normalen Etagen-Spritzgießmaschinen annähernd flächengleiche Kavitäten benötigt werden, ist dies vorliegend aufgrund der Verriegelungssysteme und Druckkissen an beiden Formaufspannplatten nicht notwendig. Die Kavitäten in den beiden Etagen können unterschiedliche Flächen sowie unterschiedliche Kühl- und Plastifizierzeiten aufweisen. Der Etagenspritzgießprozess kann hierdurch freier gestaltet werden.

Wenn die Säulen hinsichtlich ihrer Länge auf einen Tandem-Betrieb ausgelegt sind, kann es vorkommen, dass sie beim Etagen- und beim Mehrkomponenten-Betrieb, wenn beide Arbeitsebenen gleichzeitig aufgefahren werden, aus der jeweilis nicht verriegelten Formaufspannplatte austauchen und beim Zufahren wieder eintauchen. Da es sich vorliegend um relativ kurze Säulenstücke zu beiden Seiten der Mittelplatte handelt, ist dies jedoch unproblematisch.

Zur Versorgung der hydraulischen Antriebseinheiten wird ein Hydrauliksystem vorgesehen, das die Spritzaggregate und die Schließeinheit unabhängig voneinander versorgen kann. Beispielsweise können drei voneinander unabhängige Pumpaggregate vorgesehen werden, je eines für die beiden Spritzaggregate und eines für die Schließeinheit.

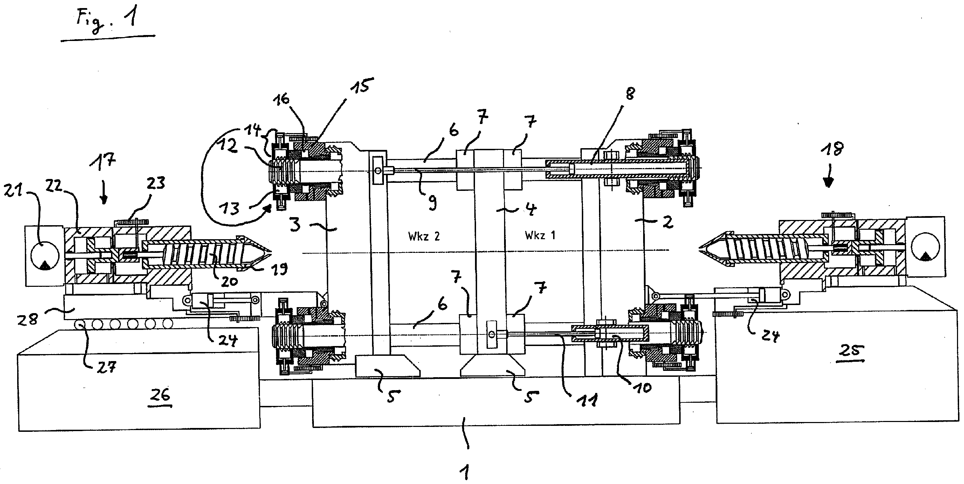

Nachfolgend soll die Erfindung anhand von Ausführungsbeispielen und unter Bezugnahme auf die Figuren 1 bis 2 näher beschrieben und erläutert werden.

Bei der Spritzgießmaschine gemäß der Figur 1 sind auf einem Maschinenbett 1 eine feststehende Formaufspannplatte 2 fest montiert und eine bewegliche Formaufspannplatte 3 sowie eine Mittelplatte 4 auf Gleitschuhen 5 verschieblich abgestützt. Zwischen den Formaufspannplatten 2 und 3 verlaufen vier Säulen 6, von denen in der Figur 1 nur die vorderen Säulen zu sehen. Diese Säulen verlaufen durch die Mittelplatte 4 hindurch und sind an dieser mittels Befestigungsringen 7 zu beiden Seiten der Mittelplatte befestigt. Im Bereich der vorderen oberen Säule ist ein erster Fahrzylinder 8 an der feststehenden Formaufspannplatte 2 befestigt, dessen Kolbenstange 9 an der Mittelplatte vorbeigeführt und an der beweglichen Formaufspannplatte 3 angelenkt ist. Ein gleicher Fahrzylinder ist diagonal versetzt hierzu im Bereich der hinteren unteren Säule vorgesehen und daher in der Figur nicht sichtbar. Weiterhin ist im Bereich der vorderen unteren Säule ein Hilfszylinder 10 an der feststehenden Formaufspannplatte 2 befestigt, dessen Kolbenstange 11 an der Mittelplatte 4 angelenkt ist. Ein gleicher Hilfszylinder ist diagonal versetzt am Bereich der hinteren oberen Säule vorgesehen und daher in der Figur nicht sichtbar.

Die Säulen 6 durchsetzen die Formaufspannplatten 2 und 3 und weisen an ihren beiden Enden jeweils einen Abschnitt mit einer ringförmigen Vezahnung 12 auf, in die die mit einer passenden Verzahnung ausgestatteten Backen 13 eines hydraulisch betätigten Verriegelungssystems 14 eingreifen können, um die Formaufspannplatte auf dieser Seite der Säule mit dieser verklemmen bzw. verriegeln zu können. Zwischen dem Verriegelungssystem 14 und der jeweiligen Formaufspannplatte ist ein Druckkissen 15 vorgesehen, durch das die Säule 6 hydraulisch dicht hindurchgeführt ist und dessen Druckkammer 16 über eine hier nicht dargestellte Druckmittelquelle mit einem Druckmedium, beispielsweise einer Hydraulikflüssigkeit, mit Druck beaufschlagbar ist, um eine Schließkraft zu erzeugen. An jedem Ende von jeder Säule sind jeweils ein Verriegelungssystem und ein Druckkissen vorgesehen, so dass die vorliegende Schließeinheit insgesamt acht Verriegelungssysteme und acht Druckkissen aufweist. Die Verriegelungssysteme und Druckkissen an der beweglichen Formaufspannplatte 3 können unabhängig von den Verriegelungssystemen und Druckkissen an der feststehenden Formaufspannplatte 2 betätigt werden.

Zu beiden Seiten der Schließeinheit befinden sich Spritzaggregate 17 und 18, jeweils mit einem Plastifizierzylinder 19, einer Plastifizierschnecke 20, einem Hydromotor 21 für den Drehantrieb der Schnecke, einer Kolben-Zylinder-Einheit 22 als Linearantrieb der Schnecke 20 sowie mit einem Wegmesssystem 23. Für die Drehbewegung der Schnecke 20 kann aber auch ein elektromotorischer Antrieb vorgesehen werden.

Mittels Verschiebezylindern 24 können die Spritzaggregate an die Formaufspannplatten heran- und von diesen weggefahren werden. Das Spritzaggregat 18 ist auf einem Gehäuse 25 derart verschieblich montiert, dass wenigstens die notwendige Bewegung für den Wechsel des Plastifizierzylinders möglich ist. Im Gehäuse 25 kann ein erstes Pumpaggregat für die Versorgung der hydraulischen Verbraucher des Spritzaggregats 18, einschließlich des Verschiebezylinders 24 und ein zweites Pumpaggregat für die Versorgung der Schließeinheit untergebracht sein. Das Spritzaggregat 17 ist auf einem Gestell 28 montiert, das über Rollen 27 auf dem Gehäuse 26 verfahrbar abgestützt. In dem Gehäuse 26 kann das Pumpaggregat für die Versorgung der hydraulischen Verbraucher auf Seiten der beweglichen Formaufspannplatte 3 untergebracht sein, beispielsweise für das Spritzaggregat 17 und den Verschiebezylinder 24.

Die Betriebsweise der erfindungsgemäßen Schließeinheit bzw. der erfindungsgemäßen Spritzgießmaschine im Tandem-Betrieb ist wie folgt.

Für den Einbau der Formwerkzeuge W1 und W2 werden die Mittelplatte 4 mit Hilfe der Hilfszylinder 10 und die bewegliche Formaufspannplatte mit Hilfe der Fahrzylinder 8 von der feststehenden Formaufspannplatte 2 weggefahren, wobei die bewegliche Formaufspannplatte 2 auch von der Mittelplatte 4 weggefahren wird, bis zu beiden Seiten der Mittelplatte 4 genügend Raum für den Einbau der Werkzeuge vorliegt. Beim Betrieb der Spritzgießmaschine werden die Hilfszylinder 10 nicht benötigt und daher auf drucklosen Umlauf geschaltet.

Ausgangssituation für die weitere Erläuterung eines Spritzgießzyklus soll ein Zustand sein, in dem das Formwerkzeug W2 geschlossen ist und das Formwerkzeug W1 parallel dazu aufgefahren werden kann. Die bewegliche Formaufspannplatte 3 ist hierbei mit den Säulen 6 verriegelt und die Druckkammern 16 an der beweglichen Formaufspannplatte 3 sind mit Hydraulikflüssigkeit unter Schließdruck gefüllt, d.h. das Werkzeug 2 ist schließkraftbeaufschlagt. Nunmehr kann in das Werkzeug W2 von dem Spritzaggregat 17 erzeugte Kunststoffschmelze eingespritzt und ein oder mehrere Kunststoff-Formteile hergestellt werden, je nach Anzahl der Formteilkavitäten in dem Werkzeug W2. An das Einspritzen schließen sich die Phasen des Nachdrucks und der Kühlung an. Während der Zeit, in der das Werkzeug W2 geschlossen und verriegelt ist, kann das Werkzeug W1 aufgefahren werden. Hierzu werden an der feststehenden Formaufspannplatte 2 die Druckkissen 15 druckentlastet und die Verriegelungssysteme 14 in ihre Offenstellung bewegt, in der die Verriegelungsbacken 13 aus der Verzahnung 12 herausgefahren sind und sich auf Abstand von den Säulen befinden. Anschließend können die Fahrzylinder 8 betätigt werden, wodurch die Einheit aus beweglicher Formaufspannplatte 3, Werkzeug W2, Mittelplatte 4 und den Säulen 6 von der feststehenden Formaufspannplatte 2 weg verfahren wird. Am Ende dieses Verfahrweges ist das Werkzeug W1 geöffnet und das oder die in dem Werkzeug W1 zuvor erzeugten fertigen Kunststoff-Formteile können ausgeworfen oder mittels eines Roboters entnommen werden. Anschließend kann das Werkzeug W1 durch Betätigen der Fahrzylinder 8 wieder zugefahren werden, wobei die Einheit aus beweglicher Formaufspannplatte 3, Werkzeug W2, Mittelplatte 4 und den Säulen 6 auf die feststehende Formaufspannplatte 2 hin verfahren wird. Wenn das Werkzeug W1 wieder geschlossen ist, ragen die Säulen 6 mit ihrem verzahnten Endabschnitt über die feststehende Formaufspannplatte 2 in Richtung des Spritzaggregats 18 hinaus. Nun kann die feststehende Formaufspannplatte 2 mit den Säulen 6 verriegelt werden, indem die ihr zugeordneten Verriegelungssysteme 14 betätigt werden und nach erfolgreicher Verriegelung können die Druckkissen betätigt werden, indem die Druckkammern 16 an der feststehenden Formaufspannplatte mit Hydraulikflüssigkeit unter Schließdruck gefüllt werden, d.h. das Werkzeug 1 ist schließkraftbeaufschlagt. Nunmehr kann in das Werkzeug W1 von dem Spritzaggregat 18 erzeugte Kunststoffschmelze eingespritzt und ein oder mehrere Kunststoff-Formteile hergestellt werden, je nach Anzahl der Formteilkavitäten in dem Werkzeug W1. An das Einspritzen schließen sich die Phasen des Nachdrucks und der Kühlung an. Während dieser Zeit kann das Werkzeug W2 aufgefahren werden. Hierzu werden an der beweglichen Formaufspannplatte 3 die Druckkissen 15 druckentlastet und die Verriegelungssysteme 14 in ihre Offenstellung bewegt, in der die Verriegelungsbacken 13 aus der Verzahnung 12 herausgefahren sind und sich auf Abstand von den Säulen befinden. Anschließend können die Fahrzylinder 8 betätigt werden, wodurch die bewegliche Formaufspannplatte 3 und die auf ihr aufgespannte Hälfte des Werkzeug W2 von der Einheit aus Mittelplatte 4, Säulen 6, Werkzeug W1 und feststehender Formaufspannplatte 2 weg verfahren werden. Am Ende dieses Verfahrweges ist das Werkzeug W2 geöffnet und das oder die in dem Werkzeug W2 erzeugten, fertigen Kunststoff-Formteile können ausgeworfen oder mittels eines Roboters entnommen werden. Anschließend kann das Werkzeug W2 durch Betätigen der Fahrzylinder 8 wieder zugefahren werden. Wenn das Werkzeug W2 wieder geschlossen ist, ragen die Säulen 6 mit ihrem verzahnten Endabschnitt über die bewegliche Formaufspannplatte 3 in Richtung des Spritzaggregats 17 hinaus. Nun kann die bewegliche Formaufspannplatte 3 mit den Säulen 6 verriegelt werden, indem die ihr zugeordneten Verriegelungssysteme 14 und nach erfolgreicher Verriegelung die Druckkissen 15 betätigt werden, indem die Druckkammern 16 an der beweglichen Formaufspannplatte 3 mit Hydraulikflüssigkeit unter Schließdruck gefüllt werden, d.h. das Werkzeug 2 ist erneut schließkraftbeaufschlagt. Ein neuer Spritzgießzyklus kann beginnen.

Für einen Etagen-Betrieb wird der Hilfszylinder 10 nicht nur zum Werkzeugeinbau verwendet, sondern dauerhaft als Verfahrzylinder zwischen der feststehenden Formaufspannplatte 2 und der Mittelplatte 4. Im Unterschied zu dem vorbeschriebenen Tandem-Betrieb werden nunmehr beide Arbeitsebenen gleichzeitig oder mit einer gewünschten Zeitverschiebung auf- und zugefahren. Wenn beide Arbeitsebenen zugefahren sind, können beide Formaufspannplatten 2 und 3 mit den Säulen 6 verriegelt und Schließkraft aufgebaut werden. Ausgangssituation für die weitere Erläuterung dieser Betriebsweise soll ein Zustand sein, wie er in der Figur 1 dargestellt ist, bei dem beide Formwerkzeuge W1 und W2 geschlossen sind und die Kühlphase abgeschlossen ist. Zunächst werden an beiden Formaufspannplatten 2 und 3 die Druckkissen 15 entlastet und die Verriegelungssysteme 14 in ihre Offenstellung bewegt. Anschließend können sowohl die Verfahrzylinder 8 als auch die Hilfs- bzw. Verfahrzylinder 10 betätigt werden, wodurch die Mittelplatte 4 und die bewegliche Formaufspannplatte 3 von der feststehenden Formaufspannplatte 2 weg verfahren werden. Durch geeignete Abstimmung der Verfahrgeschwindigkeiten und der Verfahrwege zwischen den Verfahrzylindern 8 einerseits und den Hilfs- bzw. Verfahrzylindern 10 andererseits werden beide Etagen bzw. beide Arbeitsebenen um eine ausreichende Strecke aufgefahren. Nunmehr können die fertigen Formteile entnommen und anschließend die Schließeinheit wieder zugefahren werden. Wenn beide Formwerkzeuge zugefahren sind, können beide Formaufspannplatten 2 und 3 wieder mit den Säulen 6 verriegelt und erneut Schließkraft aufgebaut werden. Wenn die Mittelplatte mit einem drehbaren Formwerkzeugträger ausgestattet ist, ist auch ein Mehrkomponenten-Betrieb möglich. Beispielsweise kann die Mittelplatte als Tragrahmen ausgebildet sein und einen platten- oder würfelförmigen Formwerkzeugträger aufweisen, der mittels eines geeigneten Drehantriebs gedreht werden kann, um die in einer Etage bzw. Arbeitsebene hergestellten Vorspritzlinge in bei geöffneter Schließeinheit in die andere Etage bzw. Arbeitsebene zu transferieren. Ein derartiger Tragrahmen ist beispielsweise in der WO 03/013824 A1 in verschiedenen Ausführungsformen beschrieben und kann daher vorliegend als bekannt vorausgesetzt werden.

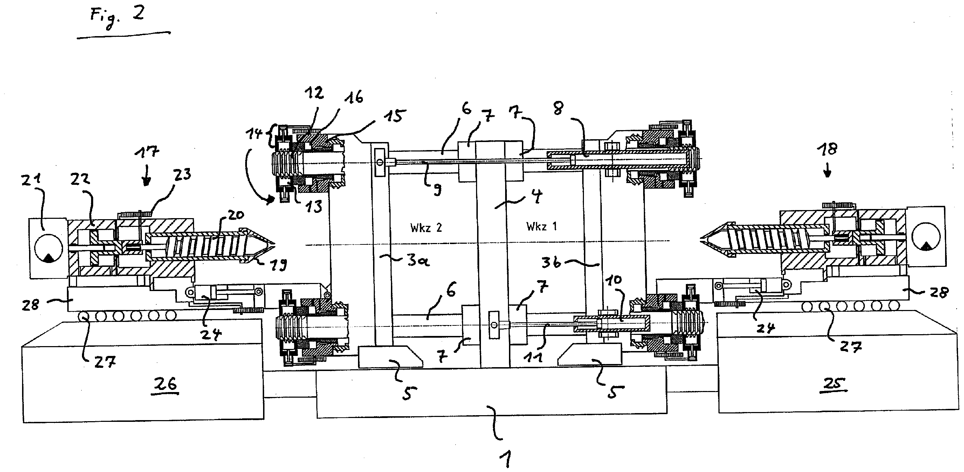

Die Figur 2 zeigt eine alternative Ausführungsform, bei der die Mittelplatte 4 fest mit dem Maschinenbett 1 verbunden ist und die beiden äußeren Formaufspannplatten als bewegliche Formaufspannplatten 3a und 3b ausgeführt und auf Gleitschuhen 5 verschieblich auf dem Maschinenbett 1 abgestützt sind. Desweiteren sind nunmehr beide Spritzaggregate 17 und 18 auf Rollen 27 verschieblich abgestützt, damit sie beim Verfahren der äußeren Formaufspannplatten 3a, 3b mitbewegt werden können. Im übrigen entspricht diese Ausführungsform derjenigen von Figur 1.

Der Einbau der Werkzeuge W1 und W2 erfolgt analog wie beim ersten Ausführungsbeispiel gemäß Figur 1, wobei die rechte bewegliche Formaufspannplatte 3b mittels der Hilfszylinder 10 von der Mittelplatte 4 weg verfahren wird und die linke bewegliche Formaufspannplatte 3a mittels der Fahrzylinder 8 von der rechten beweglichen Formaufspannplatte 3b und der Mittelplatte 4 weg verfahren wird. Bevor die Fahrzylinder 8 betätigt werden, kann es erforderlich sein, die rechte bewegliche Formaufspannplatte 3b mit den Säulen 6 zu verriegeln.

Die Betriebsweise der Spritzgießvorrichtung gemäß Figur 2 ist sowohl im Tandem-Betrieb als auch im Etagen- oder Mehrkomponenten-Betreib im wesentlichen dieselbe wie bei der Ausführung gemäß der Figur 1, mit dem Unterschied, dass die Mittelplatte 4 und die Säulen 6 nie mitbewegt werden, sondern die äußeren Formaufspannplatten 3a und 3b von der Mittelplatte weg oder auf diese zu verfahren werden, und zwar im Tandem-Betrieb wechselweise und im Etagen- und Mehrkomponenten-Betrieb gleichzeitig oder mit einer gewünschten Phasenverschiebung. Beim Tandem-Betrieb erfolgen die jeweiligen Verfahrbewegungen durch Betätigung der Fahrzylinder 8, wenn die eine Formaufspannplatte mit den Säulen und damit mit der Mittelplatte verriegelt ist - und gegebenenfalls die Druckkammer schließdruckbeaufschlagt ist - und die andere Formaufspannplatte entriegelt ist und von der Mittelplatte weg verfahren werden kann. Die Verriegelungssysteme 14 und die Druckkissen 15 werden wie im oben beschriebenen ersten Ausführungsbeispiel im Wechsel betrieben. Während auf der Seite der linken beweglichen Formaufspannplatte 3a die Verriegelungssysteme verriegelt und die Druckkissen schließdruckbeaufschlagt ist, können auf der Seite der rechten beweglichen Formaufspannplatte 3b nach dem Öffnen des Werkzeugs W1 die Druckkissen druckentlastet und die Verrieglungssysteme entriegelt werden, und umgekehrt. Beim Etagen- und beim Mehrkomponenten-Betrieb erfolgen die Verfahrbewegungen durch Betätigung der Fahrzylinder 8 und der Hilfs- bzw. Verfahrzylinder 10, wenn beide Formaufspannplatten entriegelt sind. Durch geeignete Abstimmung der Verfahrgeschwindigkeiten und der Verfahrwege zwischen den Verfahrzylindern 8 einerseits und den Hilfs- bzw. Verfahrzylindern 10 andererseits werden beide Formaufspannplatten 2 und 3 um eine ausreichende Strecke von der Mittelplatte 4 weg verfahren und damit beide Etagen bzw. Arbeitsebenen genügend weit aufgefahren.

In beiden Ausführungsbeispielen beruht der Produktionsablauf im Tandem-Betrieb darauf, dass der Herstellungsprozeß für die Kunststoff-Formteile in den beiden Etagen mit den Werkzeugen W1 und W2 zeitlich versetzt zueinander durchgeführt wird. Während auf der einen Werkzeugseite die Funktionen "Einspritzen", "Nachdruck", "Kühlen" und "Plastifizieren" ablaufen, laufen auf der Seite des anderen Werkzeugs die Funktionen "Öffnen", gegebenenfalls "Kernziehen", "Auswerfen" und "Schließen" ab.

Mit der Erfindung können alle Anwendungen aus dem Bereich einer klassischen Tandem-Spritzgießmaschine ausgeführt werden. In den beiden Etagen können gleiche oder unterschiedliche Formteile hergestellt werden. Beispielsweise können auch spiegelbildliche Formteile wie eine rechte und eine linke Innenverkleidung einer Fahrzeugtür in den beiden Etagen hergestellt werden. Desweiteren eignet sich die Erfindung auch besonders für die Herstellung von großvolumigen Teilen mit einer langen Kühlzeit wie zum Beispiel Paletten.

Da die Hilfszylinder nicht nur zum Werkzeugeinbau betätigt, sondern generell auch als Verfahrzylinder eingesetzt werden können, kann außer einem Tandem-Betrieb auch ein Etagen- oder Mehrkomponentenbetrieb erfolgen. Im Ergebnis ist die erfindungsgemäße Schließeinheit also universell verwendbar.

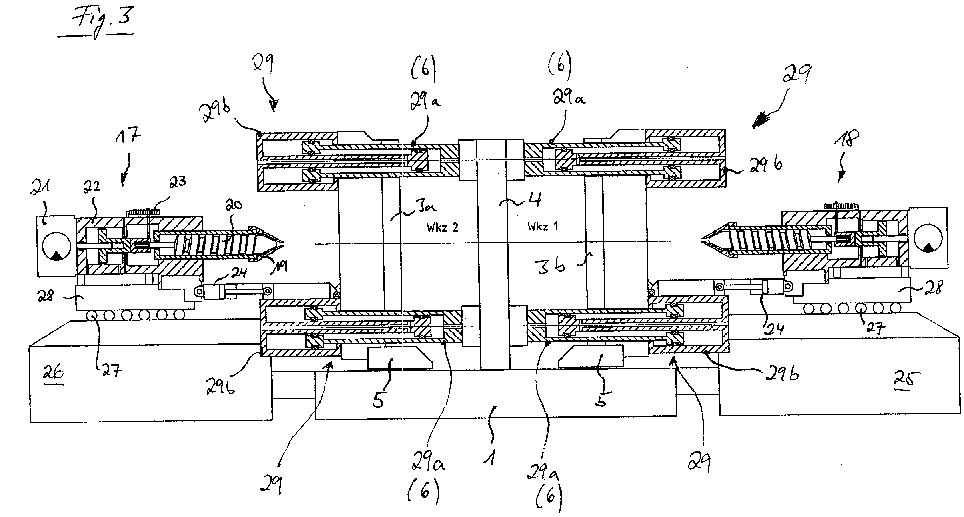

Die Figur 3 zeigt eine nicht erfindungsgemäße Ausführungsform mit ortsfester Mittelplatte 4 und zwei äußeren beweglichen Formaufspannplatten 3a und 3b, bei der die Funktionen Verfahren und Schließkraftaufbau in ein- und dieselben Kolben-Zylinder-Einheiten integriert sind. An jeder beiden beweglichen Formaufspannplatten 3a und 3b sind vier Kolben-Zylinder-Einheiten 29 vorgesehen, die jeweils einen innenliegenden Teil als Verfahrzylinder 29a und einen außen liegenden Teil als eigentlichen Schließzylinder 29b aufweisen. Die Betriebsweise der Spritzgießvorrichtung gemäß Figur 3 ist im wesentlichen dieselbe wie oben bei der Ausführung gemäß der Figur 2 beschrieben, und zwar sowohl im Tandem-Betrieb als auch beim Etagen- bzw. MehrkomponentenBetrieb. Beim Tandem-Betrieb erfolgen die jeweiligen Verfahrbewegungen durch Betätigung der Verfahrzylinder 29a an der zu verfahrenden Formaufspannplatte, wenn die nicht zu verfahrende Formaufspannplatte mit der Mittelplatte verriegelt istbeispielsweise durch hydraulische Blockierung der Kolben-Zylinder-Einheiten 29 an dieser ruhenden Formaufspannplatte. Die Kolben-Zylinder-Einheiten 29 werden analog der Ausführungsform gemäß der Figur 2 im Wechsel betrieben. Während auf der Seite der linken beweglichen Formaufspannplatte 3a die dortigen Kolben-Zylinder-Einheiten 29 mit Schließkraft beaufschlagt sind, d.h. die dortigen Schließzylinder 29b, können auf der Seite der rechten beweglichen Formaufspannplatte 3b die Schießzylinder 29b auf dieser Seite druckentlastet und die zugehörigen Verfahrzylinder 29 betätigt werden- und umgekehrt. Beim Etagen- und beim Mehrkomponentenbetrieb hingegen werden die Kolben-Zylinder-Einheiten in der Regel gleichzeitig betätigt.

### Bezugszeichenliste

- 1: Maschinenbett
- 2: Feststehende Formaufspannplatte
- 3, 3a, 3b: Bewegliche Formaufspannplatte
- 4: Mittelplatte
- 5: Gleitschuh
- 6: Säule
- 7: Befestigungsring
- 8: Fahrzylinder
- 9: Kolbenstange des Fahrzylinders
- 10: Hilfszylinder / Fahrzylinder
- 11: Kolbenstange des Hilfszylinders / Fahrzylinders
- 12: Verzahnter Abschnitt der Säule 6
- 13: Verriegelungsbacken
- 14: Verriegelungssystem
- 15: Druckkissen
- 16: Druckkammer
- 17: Erstes Spritzaggregat
- 18: Zweites Spritzaggregat
- 19: Plastifizierzylinder
- 20: Schnecke
- 21: Hydromotor oder Elektromotor
- 22: Kolben-Zylinder-Einheit
- 23: Wegmesssystem
- 24: Verschiebezylinder
- 25: Gehäuse
- 26: Gehäuse
- 27: Rollen
- 28: Gestell
- 29: Kolben-Zylinder-Einheiten
- 29a: Verfahrzylinder
- 29b: Schließzylinder

## Patentansprüche

1. Schließeinheit einer Spritzgießmaschine mit zwei äußeren Formaufspannplatten (2, 3), mit einer zwischen den äußeren Formaufspannplatten (2, 3) angeordneten Mittelplatte (4), sowie mit Säulen (6) zur Aufnahme einer Schließkraft, wobei, die Säulen (6) an der Mittelplatte (4) befestigt sind, dass an jeder der beiden äußeren Formaufspannplatten (2, 3) Verriegelungssysteme (14) zum Verriegeln der Formaufspannplatten (2, 3) mit den Säulen (6) sowie Druckkissen (15) zur Erzeugung einer Schließkraft vorgesehen sind, wobei die Verriegelungssysteme (14) und die Druckkissen (15) an der einen äußeren Formaufspannplatte unabhängig von den Verriegelungssystemen (14) und den Druckkissen (15) der anderen Formaufspannplatte betätigt werden können, **dadurch gekennzeichnet, dass** wenigstens ein Linearantrieb (8, 9) zwischen den beiden äußeren Formaufspannplatten (2, 3) vorgesehen ist, mittels dem die äußeren Formaufspannplatten (2, 3) relativ zueinander verfahren werden können, wenn die eine der äußeren Formaufspannplatten mit der Mittelplatte verriegelt ist und die andere der äußeren Formaufspannplatten nicht verriegelt ist.

2. Schließeinheit nach Anspruch 1,
**dadurch gekennzeichnet, dass**
die Mittelplatte (4) fest mit dem Maschinenbett (1) der Spritzgießmaschine verbunden ist und dass die beiden äußeren Formaufspannplatten (2, 3) verschieblich auf dem Maschinenbett (1) abgestützt sind.

3. Schließeinheit nach Anspruch 1,
**dadurch gekennzeichnet, dass**
eine der äußeren Formaufspannplatten fest mit dem Maschinenbett (1) verbunden ist (feststehende Formaufspannplatte 2), und dass die andere äußere Formaufspannplatte (bewegliche Formaufspannplatte 3) sowie die Mittelplatte (4) verschieblich auf dem Maschinenbett (1) abgestützt sind.

4. Schließeinheit nach einem der Ansprüche 1 bis 3,
**dadurch gekennzeichnet, dass**
zwei obere und zwei untere, jeweils durch die Mittelplatte (4) hindurch verlaufende Säulen (6) vorgesehen sind und dass für jede dieser vier Säulen jeweils ein Verriegelungssystem (14) und ein Druckkissen (15) an jeder der beiden äußeren Formaufspannplatten (2, 3) vorgesehen sind.

5. Schließeinheit nach einem der Ansprüche 1 bis 4,
**dadurch gekennzeichnet, dass**
die Mittelplatte (4) mit einem drehbaren Formwerkzeugträger ausgestattet ist.

6. Spritzgießmaschine mit einer Schließeinheit nach einem der vorangehenden Ansprüche sowie mit den äußeren Formaufspannplatten (2, 3) zugeordneten Spritzaggregaten (17, 18).

7. Spritzgießmaschine nach Anspruch 6,
**dadurch gekennzeichnet, dass**
jeder Etage ein eigenes Pumpenaggregat zugeordnet ist, so dass die Druckkissen (14) bzw. die Schließzylinder (29b) der einen Formaufspannplatte unabhängig von den Druckkissen (14) bzw. den Schließzylindern (29b) der anderen Formaufspannplatte betrieben werden können.

8. Spritzgießmaschine nach Anspruch 6 oder 7,
**dadurch gekennzeichnet, dass**
die Spritzaggregate (17, 18) jeweils einen Hydromotor (21) oder Elektromotor (21) als Drehantrieb und einen Hydraulikzylinder (22) als Linearantrieb für die Plastifizierschnecke (20) aufweisen, dass Hydraulikzylnder (24) zum Verfahren der Spritzaggregate (17, 18) gegenüber den Formaufspannplatten (2, 3) vorgesehen sind, und dass den Spritzaggregaten (17, 18) und der Schließeinheit jeweils ein eigenes Pumpenaggregat zugeordnet ist, mit dem vorzugsweise zusätzlich die Druckkissen (15) bzw. die Schließzylinder (29b) an der diesem Spritzaggregat (17, 18) zugeordneten Formaufspannplatte (2, 3) betrieben werden können.

## Claims

1. A clamping unit of an injection moulding machine with two outer platens (2, 3), with a central plate (4) arranged between the outer platens (2, 3), and with columns (6) to receive a clamping force, wherein the columns (6) are secured to the central plate (4), that at each of the two outer platens (2, 3) locking systems (14) for locking the platens (2, 3) with the columns (6), and pressure pads (15) for generating a clamping force are provided, wherein the locking systems (14) and the pressure pads (15) at the one outer platen can be actuated independently of the locking systems (14) and the pressure pads (15) of the other platen, **characterized in that** at least one linear drive (8, 9) is provided between the two outer platens (2, 3), by means of which the outer platens (2, 3) can be moved relative to one another when one of the outer platens is locked with the central plate and the other of the outer platens is not locked.

2. The clamping unit according to Claim 1,
**characterized in that**
the central plate (4) is securely connected to the machine bed (1) of the injection moulding machine and that the two outer platens (2, 3) are supported displaceably on the machine bed (1).

3. The clamping unit according to Claim 1,
**characterized in that**
one of the outer platens is securely connected to the machine bed (1) (stationary platen 2), and that the other outer platen (movable platen 3) and the central plate (4) are supported displaceably on the machine bed (1).

4. The clamping unit according to one of Claims 1 to 3,
**characterized in that**
two upper and two lower columns (6), running respectively through the central plate (4), are provided, and that for each of these four columns respectively a locking system (14) and a pressure pad (15) are provided on each of the two outer platens (2, 3) .

5. The clamping unit according to one of Claims 1 to 4,
**characterized in that**
the central plate (4) is equipped with a rotatable moulding tool carrier.

6. An injection moulding machine with a clamping unit according to one of the preceding claims and with injection units (17, 18) associated with the outer platens (2, 3).

7. The injection moulding machine according to Claim 6,
**characterized in that**
each stack has its own pump unit associated with it, so that the pressure pads (14) or respectively the locking cylinders (29b) of the one platen can be operated independently of the pressure pads (14) or respectively the locking cylinders (29b) of the other platen.

8. The injection moulding machine according to Claim 6 or 7,
**characterized in that**
the injection units (17, 18) have respectively a hydraulic motor (21) or electric motor (21) as rotary drive, and a hydraulic cylinder (22) as linear drive for the plasticizing screw (20), that hydraulic cylinders (24) are provided for moving the injection units (17, 18) with respect to the platens (2, 3), and that the injection units (17, 18) and the clamping unit have respectively their own pump unit associated with them, by which preferably in addition the pressure pads (15) or respectively the locking cylinders (29b) at the platen (2, 3) associated with this injection unit (17, 18) can be operated.

## Revendications

1. Unité de fermeture pour une machine de moulage par injection comprenant deux plaques de serrage de moule extérieures (2, 3), comprenant une plaque centrale (4) disposée entre les plaques de serrage de moule extérieures (2, 3), ainsi que des colonnes (6) pour recevoir une force de fermeture, dans lequel les colonnes (6) sont fixées sur la plaque centrale (4), des systèmes de verrouillage (14) pour verrouiller les plaques de serrage de moule (2, 3) avec les colonnes (6) ainsi que des coussins de pression (15) pour produire une force de fermeture sont prévus sur chacune des deux plaques de serrage de moule extérieures (2, 3), dans lequel les systèmes de verrouillage (14) et les coussins de pression (15) peuvent être actionnés sur l'une plaque de serrage de moule extérieure indépendamment des systèmes de verrouillage (14) et des coussins de pression (15) de l'autre plaque de serrage de moule, **caractérisé en ce qu'**au moins un entraînement linéaire (8, 9) est prévu ente les deux plaques de serrage de moule extérieures (2, 3) au moyen duquel les plaques de serrage de moule extérieures (2, 3) peuvent être déplacées l'une par rapport à l'autre lorsque l'une des plaques de serrage de moule extérieures est verrouillée avec la plaque centrale et l'autre des plaques de serrage de moule extérieures n'est pas verrouillée.

2. Unité de fermeture selon la revendication 1, **caractérisé en ce que** la plaque centrale (4) est reliée fixement au bâti de machine (1) de la machine de moulage par injection et que les plaques de serrage de moule extérieures (2, 3) sont appuyées sur le bâti de machine (1) en pouvant être déplacées.

3. Unité de fermeture selon la revendication 1, **caractérisé en ce qu'**une des plaques de serrage de moule extérieures (2, 3) (plaque de serrage de moule fixe 2) est reliée fixement au bâti de machine (1) et que l'autre plaque de serrage de moule extérieure (plaque de serrage de moule mobile 3) ainsi que la plaque centrale (4) sont appuyées sur le bâti de machine (1) en pouvant être déplacées.

4. Unité de fermeture selon l'une des revendications 1 à 3,
**caractérisé en ce que** deux colonnes (6) supérieures et deux colonnes (6) inférieures traversant respectivement la plaque centrale (4) sont prévues et que pour chacune de ces quatre colonnes, un système de verrouillage (14) et un coussin de pression (15) respectifs sont prévus sur chacune des deux plaques de serrage de moule extérieures (2, 3).

5. Unité de fermeture selon l'une des revendications 1 à 4,
**caractérisé en ce que** la plaque centrale (4) est dotée d'un porte-outil de moule rotatif.

6. Machine de moulage par injection comprenant une unité de fermeture selon l'une des revendications précédentes ainsi que des groupes d'injection (17, 18) attribués aux plaques de serrage de moule extérieures (2, 3).

7. Machine de moulage par injection selon la revendication 6, **caractérisé en ce que** chaque étage a son propre groupe de pompes, de sorte que les coussins de pression (14), respectivement les vérins de fermeture (29b) de l'une plaque de serrage de moule peuvent être actionnés indépendamment des coussins de pressions (14), respectivement des vérins de fermeture (29b) de l'autre plaque de serrage de moule.

8. Machine de moulage par injection selon la revendication 6 ou 7, **caractérisé en ce que** les groupes d'injection (17, 18) présentent respectivement un moteur hydraulique (21) ou un moteur électrique (21) en tant qu'entraînement rotatif et un vérin hydraulique (22) en tant qu'entraînement linéaire pour la vis sans fin de plastification (20), que des vérins hydrauliques (24) pour déplacer les groupes d'injection (17, 18) par rapport aux plaques de serrage de moule (2, 3) sont prévus et que les groupes d'injection (17, 18) et l'unité de fermeture ont leur propre groupe de pompes avec lequel en plus de préférence, les coussins de pression (15), respectivement les vérins de fermeture (29b), peuvent être actionnés sur la plaque de serrage de moule (2, 3) attribuée à ce groupe d'injection (17, 18).
